Europäisches Patentamt

**European Patent Office**

Office européen des brevets

(19)

(11) Publication number: **0 153 342**
**B1**

(12)

# EUROPEAN PATENT SPECIFICATION

(45) Date of publication of patent specification: **02.11.88**

(51) Int. Cl.⁴: **B 29 C 49/10,** B 29 C 49/28

(21) Application number: **84902934.3**

(22) Date of filing: **08.08.84**

(86) International application number:
**PCT/GB84/00275**

(87) International publication number:
**WO 85/01011 14.03.85 Gazette 85/07**

(54) **METHOD OF AND APPARATUS FOR PRODUCING TUBULAR ARTICLES OF BIAXIALLY ORIENTED POLYMERS.**

(30) Priority: **19.08.83 GB 8322360**

(43) Date of publication of application:
**04.09.85 Bulletin 85/36**

(45) Publication of the grant of the patent:
**02.11.88 Bulletin 88/44**

(84) Designated Contracting States:
**AT BE CH DE FR LI LU NL SE**

(56) References cited:
**EP-A-0 052 490**
**FR-A-1 089 297**
**FR-A-1 321 809**
**US-A-3 032 823**
**US-A-3 694 178**
**US-A-3 837 776**
**US-A-4 144 298**
**US-E- 28 063**

(73) Proprietor: **METAL BOX p.l.c.**
**Queens House Forbury Road**
**Reading RG1 3JH Berkshire (GB)**

(72) Inventor: **BROOKS, David, William 3 White**
**Horse Crescent**
**Grove**
**Wantage Oxfordshire OX12 OPY (GB)**

(74) Representative: **Sawers, Lawrence Peter et al**
**PAGE, WHITE & FARRER 5 Plough Place New**
**Fetter Lane**
**London EC4A 1HY (GB)**

**EP 0 153 342 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of producing tubular articles, according to the preamble of claim 1 and to an apparatus for producing tubular articles according to the preamble of claim 12. It is particularly concerned with the method of and an apparatus for the production of such tubular articles from tubular articles of smaller dimensions having at least one open end, such as straight open-ended tubes, tubes with one closed end, or moulded or extruded pre-forms having an approximation to the shape of the article to be produced.

It is known to produce tubular articles, such as bottles, of biaxially oriented crystallisable thermoplastic polymers, particularly saturated linear polyesters such as polyethylene terephthalate, by stretch-blowing heated preforms into external moulds, using internal gas pressure introduced through the open end or mouth of the preform. In our copending U.K. Patent Application No. 8037137, published under No. 2089276A, which forms the preambles of claims 1 and 12, we have described a method of forming biaxially oriented tubular articles which may be used as bodies for processable food containers, the method involving longitudinal stretching of an open-ended tube by mechanical means, which temporarily clamp and seal both ends of a section of the tube, and radial expansion of the tube by internal fluid pressure within an external mould, at a temperature which is normally in the range from 75°C to 120°C. The external moulds employed in these prior processes are costly and have a high heat capacity which makes it impossible to subject the article to a heat treatment, such as annealing, involving rapid changes in temperature, until the article has been removed from the mould, but the use of an external mould has hitherto been thought necessary to achieve accurate dimensioning of the finished article.

It is known from US—A—3837776 to form a blown article such as a container by moulding a plastics material on to the outer surface of an inflatable balloon which forms part of the apparatus and then inflating the balloon to form the plastics material into the desired shape without external constraint apart from a flat surface or baffle which shapes the flat base of the container. The blown container is cooled externally by air or other gas and the balloon is deflated while air is admitted into the space between the balloon and the now-rigid blown container. The desired shape is obtained by designing the wall thickness or stiffness of the balloon so that it blows to a generally cylindrical contour along most of its length. The internal fluid pressure acts on the internal surface of the balloon, not on the plastics material which is to form the container, and it is the balloon which constrains the plastics material to adopt the shape of the blown container and thus in effect forms an inflatable mould member.

In the continuous blown film process for producing biaxially oriented films of crystallisable thermoplastic polymers such as polyethylene and polypropylene, the molten polymer is forced out of a ring die as a continuous tube, cooled externally and/or internally to below its melting point, stretched and oriented longitudinally by drawing it through quench rolls running at a circumferential speed higher than the speed at which the polymer leaves the ring die, and stretched and oriented transversely by simultaneous or sequential application of internal fluid pressure in the absence of external or internal mould elements.

According to the present invention, a method of producing tubular articles of biaxially oriented crystallisable polyethylene terephthalate from tubular articles of smaller dimensions having at least one open end, by a discontinuous process, comprises the steps of mechanically engaging both ends of one of the smaller tubular articles, heating the smaller tubular article to a stretching temperature of 75°C to 120°C which is above the glass transition temperature of the polymer but below its melting temperature, stretching the tubular article axially by mechanical means, and simultaneously or sequentially stretching the tubular article both axially and transversely by internal fluid pressure introduced through said open end and acting directly on the internal surface of the tubular article, and is characterised in that the transverse stretching using internal fluid pressure is carried out in free space without the use of external or internal mould members.

It has surprisingly been found that this combination of mechanical axial stretching with fluid pressure axial and transverse stretching, in the absence of any external or internal mould members to constrain the transverse stretching, can result in the production of tubular articles of consistent wall thickness in a reproducible manner, while also achieving the good mechanical properties normally provided by biaxial orientation of the polymer.

Preferably the method comprises the further step of subsequently heating the stretched and biaxially oriented article to a temperature above the stretching temperature to anneal the polymer, while maintaining an internal fluid pressure. The absence of an external mould facilitates such further heating and enables it to be carried out immediately after the stretching without transferring the article to another apparatus. The method also preferably comprises the further step of cooling the annealed article before releasing the internal fluid pressure. Again the absence of an external mould facilitates this operation.

During the annealing and/or cooling, the internal fluid pressure is preferably reduced below that used for the stretching of the tubular article.

The engaging and the axial stretching by mechanical means may, for example, be effected by an external clamp and an internal plug securing one end and a chuck element engaging the other end of the tubular article, the chuck element having an inlet for fluid pressure and being movable relative to the clamp and plug. Alternatively they may be effected by a chuck element securing said open end and having an inlet for fluid pressure, and a head mounted on a rod which is slidable through, and movable relative to, the chuck element.

Preferably the axial stretching by mechanical means is commenced before the internal fluid pressure is introduced to effect both axial and transverse stretching, so that the mechanical axial stretching is in advance of the axial stretching caused by the internal fluid pressure, *e.g.* by 10 to 20%.

Application of heat to the article may be continued during the stretching thereof.

Preferably the internal fluid pressure is provided by compressed gas at a pressure in the range from 7 to 15 bars.

The article may be heated to a temperature in the range from 110°C to 240°C to effect the annealing. The annealed article may be cooled to a temperature of less than 120°C before release of the internal fluid pressure. The reduced internal fluid pressure employed during annealing and/or cooling may be in the range from 2 to 4 bars.

The method of the invention permits the production of tubular articles, in particular open-ended tubes, at high speed and with the good mechanical properties and consistent wall thickness mentioned above. Any minor variations in diameter or departures from coaxiality can easily be corrected by heat setting the tubular article on a mandrel by the method described and claimed in our British Patent No. 2138349.

The invention also resides in apparatus for producing tubular articles of biaxially oriented crystallisable polyethylene terephthalate from tubular articles of smaller dimensions having at least one open end, by a discontinuous process, comrpising means for mechanically engaging both ends of the smaller tubular article, means for moving said engaging means apart so as to stretch the article axially, means for introducing fluid under pressure through the engaging means which engages the open end (or one of the open ends) into the interior of the smaller tubular article so as to act directly upon the interior surface of the smaller tubular article and to stretch it axially and transversely, the apparatus being characterised by the absence of any external or internal mould members for defining the transverse dimensions of the stretched tubular article.

Specific embodiments of the invention will now be described by way of example and with reference to the accompanying drawings, in which:—

Figure 1 is a diagrammatic longitudinal section showing a straight open-ended tube prepared for stretching in accordance with one embodiment of the invention,

Figure 2 is a similar illustration of the tube after subjection to the stretching process,

Figure 3 illustrates the subsequent annealing of the stretched tube,

Figure 4 illustrates the subsequent cooling of the tube,

Figure 5 is a similar illustration to Figure 1 of a tube with a closed end, or preform, being prepared for the stretching process,

Figure 6 shows the stretched tubular article, and

Figure 7 is a graphical representation of the variation in temperature of the outside and inside of the tubular article during an embodiment of the present invention.

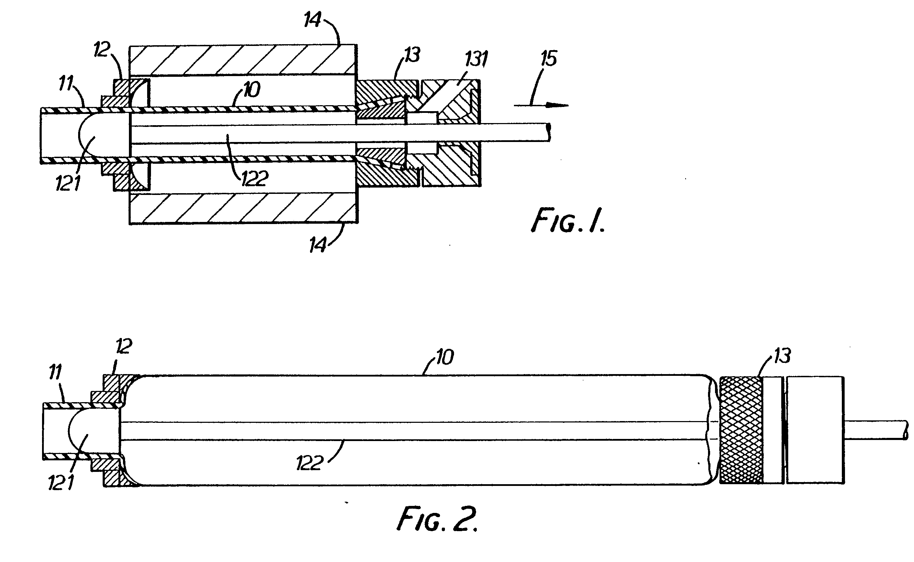

Figure 1 illustrates a straight open-ended tube 10 of a crystallisable thermoplastic polymer, specifically a saturated linear polyester such as polyethylene terephthalate. At one end 11, the tube 10 is clamped between an external stationary clamp 12 and an internal plug 121 on the end of a rod 122. At its other end, the tube 10 is engaged and gripped internally and externally by a movable chuck element 13 having an inlet passage 131 for admitting compressed air to the interior of the tube 10 and being slidably mounted on the rod 122. A generally cylindrical heater 14 is arranged around the tube 10 so as to heat it to a stretching temperature above the glass transition temperature of the polymer but below its melting temperature, specifically a temperature in the range from 75°C to 120°C in the case of polyethylene terephthalate. Alternative sources of heat may be, for example, a hot gas circulated around the tube 10, infra red radiation from electric heaters surrounding the tube, or a dielectric heater. Where radiated heat is used, the tube 10 can be rotated and the heat be directed from one side only.

After the initial heating which raises the surface temperature of the tube 10 to a temperature somewhat above the selected stretching temperature, the application of heat is stopped or reduced so that the temperature throughout the thickness of the tube 10 can be equalised and brought to the selected stretching temperature.

Axial stretching of the tube 10 is then commenced by drawing the chuck element 13 away from the clamp 12 in the direction of the arrow 15. Simultaneously, or very shortly afterwards, gas under pressure, e.g. at a pressure of 7 to 15 bars, is introduced through the inlet 131 to assist the axial stretching and to effect transverse or radial stretching of the tube 10, as shown in Figure 2.

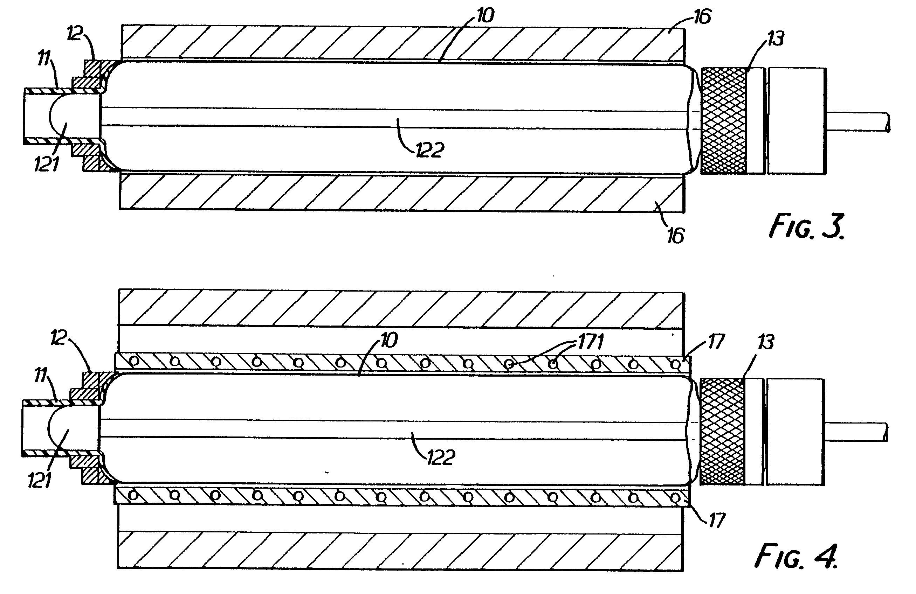

On completion of the axial and radial stretching, which effects biaxial orientation of the polymer material, the fluid pressure is reduced, e.g. to a pressure in the range of 2 to 4 bars, and heat is applied by a heater 16 as shown in Figure 3 to raise the temperature of the stretched and oriented tube 10 to a temperature above the stretching temperature, e.g. in the range from 110°C to 240°C, to effect annealing of the polymer while still under internal fluid pressure.

Finally, while still maintaining the reduced internal pressure of 2 to 4 bars, the annealed tube 10 is cooled by means of a cooler 17 (Figure 4) e.g. a cylinder with passages 171 for a cooling fluid, or by directing a cold fluid on to its surface, to reduce its temperature sufficiently to ensure that the dimensional stability of the tube 10 will be retained when the internal pressure is removed and the tube is released from

3

**0 153 342**

the clamp 12 and chuck element 13. The surface temperature is preferably reduced to less than 120°C before release of the internal fluid pressure and the clamp and chuck.

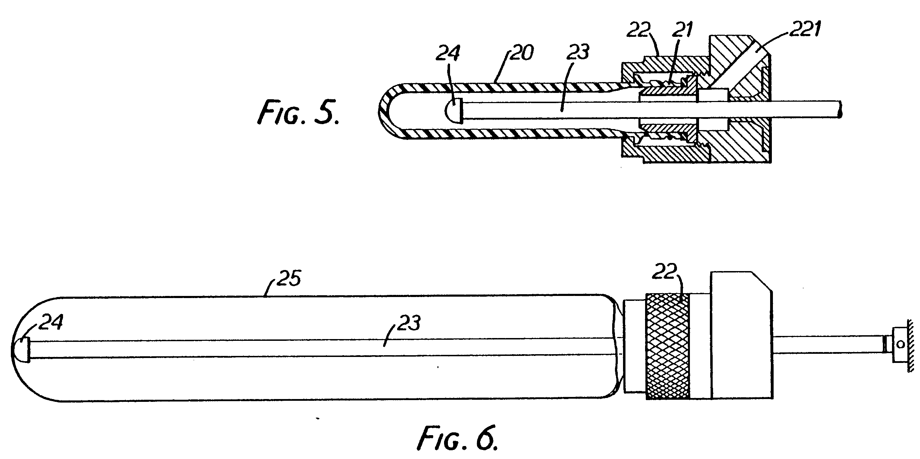

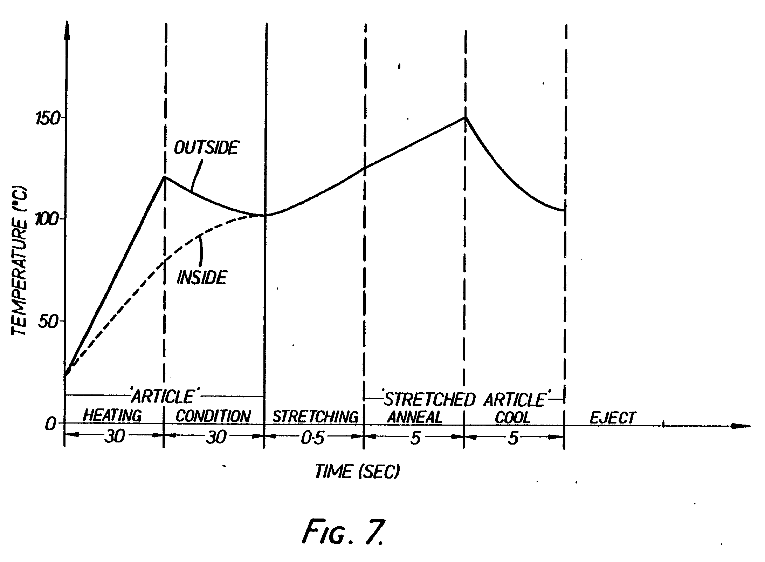

Figures 5 and 6 illustrate the application of the invention to the production of a bottle with a substantially hemispherical bottom from a closed ended tube or preform 20. The preform 20 is secured at its open end 21 by a chuck element 22 having a compressed air inlet 221 and heated as described above with reference to Figure 1. The heaters and cooler are omitted from Figures 5 and 6 for clarity. After equalisation of the temperature throughout the thickness of the preform 20, it is subjected to axial stretching by means of a mechanically operated push rod 23 having an enlarged head 24 and slidable axially through the chuck element 22. At the same time, or preferably after the preform has been stretched to substantially 10 to 20% its desired final length, fluid pressure is introduced through the inlet 221 into the preform 20 to expand it radially and to assist in stretching it axially to the form of the bottle 25 shown in Figure 6.

Annealing and cooling of the bottle then follow as previously described with reference to Figures 3 and 4, using similar pressures and temperatures.

It is found that the surface temperature of the tube 10 or preform 20 increases during the axial and radial stretching, usually to the amount of 10 to 25°C, as a result of the exothermic nature of the stretching process. This increase in temperature can be made use of for the subsequent annealing of the article, whereas in the known processes operated with an external mould it would be lost to the mould.

In a specific example of a preform 20 heated to a stretching temperature of 105°C, the heat developed during the stretching process was found to increase the surface temperature of the biaxially oriented and stretched bottle 25 to about 125°C. Radiated heat subsequently directed on to the surface of the bottle 25 for annealing could either maintain the surface temperature at 125°C during the annealing period or be used to increase it to about 150°C.

The method can be carried out extremely rapidly so as to enable a high rate of production to be achieved. In the case of bottles 25 of approximately 350 mm length and 80 mm diameter, with a mean wall thickness of approximately 0.35 mm, produced from preforms 20 of length approximately 120 mm, diameter approximately 20 mm and mean wall thickness approximately 4.5 mm, the stretching of the bottle to shape can be effected in about 0.4 to 0.8 seconds with the push rod 23 being moved at a rate of 0.3 to 1 m per second and the pressurised fluid being delivered at between 7 to 15 bars. The subsequent annealing treatment may take approximately 5 to 10 seconds and cooling to the required temperature for release of the article may take approximately 10—20 seconds.

The method described above will normally produce stretched and biaxially oriented articles with what are known as "natural draw ratios" as defined by thickness reduction of the polymer. The natural draw ratio in any particular case is determined by the stretching temperature, the orientation (if any) of the unstretched polymer and the polymer viscosity, and occurs at the point at which strain hardening is encountered. It is possible to increase the axial stretch ratio by the mechanical stretching means (chuck element 13 or push rod 23). The following Tables 1 and 2 illustrate the results obtained when producing bottles 25 from preforms 20 as illustrated in Figures 5 and 6, while varying the stretched length by means of the push rod 23. It will be seen that as the stretched length increases the diameter tends to decrease but the mean wall thickness remains substantially constant.

4

## TABLE 1

Preform
    Mean diameter=20.5 mm
    Mean wall thickness=4.5 mm
    Stretchable length=121 mm

Stretched bottle—various axial extensions

| Stretch temperature °C | Stretch blow time sec | Line blow pressure bar | Stretched length mm. | Diameter range mm. | Mean wall thickness range mm. | Thickness reduction ratio | Transverse stretch ratio | Axial stretch ratio |
|---|---|---|---|---|---|---|---|---|
| 105 | 0.6 | 11 | 325 | 81.8—81.1 | 0.35—0.36 | 12.56 | 4.00 | 3.13 |
|  |  |  | 335 | 81.8—79.5 | 0.34—0.35 | 13.04 | 3.94 | 3.31 |
|  |  |  | 350 | 82.7—79.6 | 0.33—0.35 | 12.93 | 3.97 | 3.25 |
|  |  |  | 370 | 78.0—77.0 | 0.35—0.37 | 12.50 | 3.78 | 3.30 |
|  |  |  | 380 | 79.6—78.0 | 0.34—0.36 | 12.74 | 3.83 | 3.33 |
|  |  |  | 390 | 77.3—76.4 | 0.34—0.36 | 12.89 | 3.75 | 3.44 |
|  |  |  | 410 | 75.4—73.2 | 0.32—0.35 | 13.04 | 3.63 | 3.59 |

TABLE 2

Preform
    Mean diameter=21.0 mm
    Mean wall thickness=4.0 mm
    Stretchable length=132 mm

Stretched bottle—various axial extensions

| Stretch temperature °C | Stretch blow time sec | Line blow pressure bar | Stretched length mm. | Diameter range mm. | Mean wall thickness range mm. | Thickness reduction ratio | Transverse stretch ratio | Axial stretch ratio |
|---|---|---|---|---|---|---|---|---|
| 105 | 0.6 | 11 | 340 | 84.3—81.5 | 0.34—0.37 | 11.33 | 3.95 | 2.87 |
| | | | 360 | 82.8—80.2 | 0.33—0.37 | 11.69 | 3.87 | 3.02 |
| | | | 385 | 82.7—80.5 | 0.33—0.36 | 11.63 | 3.87 | 3.00 |
| | | | 410 | 80.5—79.6 | 0.31—0.33 | 12.74 | 3.80 | 3.35 |

Table 3 illustrates results obtained while maintaining the stretched length substantially constant, and illustrates the consistency of the results obtained, in spite of the absence of any external constraint such as an external mould. The stretched lengths, diameter and wall thickness can in fact be controlled within narrow limits, with a diameter variation along the length mf the bottle of not more than 2.5 mm and a wall thickness variation of not more than 0.04 mm, in the bottles referred to in the Tables above.

7

**TABLE 3**

Preform
    Mean diameter=20.5 mm
    Mean wall thickness=4.5 mm
    Stretchable length=121 mm

Stretched bottle—same axial extensions

| Stretch tempera-ture °C | Stretch blow time sec | Line blow pressure bar | Stretched length mm. | Diameter range mm. | Mean wall thickness range mm. | Thickness reduction ratio | Transverse stretch ratio | Axial stretch ratio |
|---|---|---|---|---|---|---|---|---|
| 105 | 0.6 | 13 | 385 | 78.3—80.2 | 0.33—0.35 | 13.63 | 3.87 | 3.52 |
| | | | 380 | 81.1—79.6 | 0.33—0.34 | 13.63 | 3.90 | 3.49 |
| | | | 380 | 81.1—78.6 | 0.33—0.35 | 13.63 | 3.88 | 3.51 |
| | | | 380 | 80.8—78.3 | 0.33—0.34 | 13.63 | 3.87 | 3.52 |
| | | | 380 | 81.8—78.9 | 0.32—0.36 | 13.63 | 3.92 | 3.48 |

The results listed in Tables 1, 2 and 3 were all obtained with the same rate of mechanical axial extension, the push rod 23 being extended at 0.46 m · sec$^{-1}$.

In the following Table 4, results are given for experiments with varying rates of mechanical axial extension, and for stretching by blowing without mechanical extension for comparison. This Table also lists the results of tests of the modules and yield stress of the bottle side wall material after stretching, measured in the transverse and axial directions. For comparison, the amorphous unoriented polyethylene terephthalate material had a tensile modulus of 2200 MPa and a yield stress of 55 MPa.

It will be seen that the additional mechanical stretch in the axial direction results in a greater reduction in wall thickness than stretching by blowing alone, and the axial yield stress in particular improves with higher rates of mechanical extension.

<div style="text-align:center">TABLE 4</div>

Preform
Mean diameter=21.0 mm
Mean wall thickness=4.0 mm
Stretchable length=132 mm

<div style="text-align:center">Stretched bottle</div>

| Stretch temperature °C | Stretch blow time sec | Line blow pressure bar | Stretched length mm | Mechanical axial stretch rate msec$^{-1}$ | Diameter range mm | Mean Wall thickness range mm | Thickness reduction ratio | Transverse stretch ratio | Axial stretch ratio | Transverse tensile modulus MPa | Transverse yield stress MPa | Axial tensile modulus MPa | Axial yield stress MPa |
|---|---|---|---|---|---|---|---|---|---|---|---|---|---|
| 105 | 0.6 | 11 | 295 | — | 85.9—82.7 | .37—.45 | 9.87 | 4.00 | 2.47 | 3705 | 154 | 2634 | 83 |
| | | | 320 | 0.50 | 84.3—81.8 | .31—.35 | 12.16 | 3.97 | 3.06 | 3827 | 158 | 2470 | 91 |
| | | | 350 | 0.32 | 83.4—80.2 | .30—.34 | 12.46 | 3.88 | 3.21 | 4359 | 154 | 3105 | 101 |
| | | | 380 | 0.32 | 78.0—75.8 | .32—.36 | 11.40 | 3.66 | 3.11 | 3250 | 125 | 3315 | 116 |
| | | | 380 | 0.55 | 80.5—77.7 | .24—.28 | 15.38 | 3.77 | 4.08 | 3759 | 136 | 3269 | 112 |
| 95 | 0.6 | 11 | 280 | — | 83.4—80.2 | .39—.47 | 9.21 | 3.91 | 2.36 | 4322 | 161 | 2527 | 84 |
| | | | 340 | 0.32 | 81.2—78.6 | .33—.37 | 11.49 | 3.75 | 3.06 | 4014 | 154 | 2779 | 89 |
| | | | 340 | 0.50 | 77.2—74.0 | .32—.36 | 11.76 | 3.61 | 3.26 | 3412 | 124 | 3246 | 99 |
| | | | 330 | 0.32 | 78.6—76.0 | .32—.36 | 11.80 | 3.65 | 3.23 | 4387 | 148 | 2990 | 88 |
| | | | 385 | 0.55 | 76.6—73.2 | .29—.31 | 13.33 | 3.57 | 3.73 | 3881 | 136 | 3539 | 114 |

**Claims**

1. A method of producing tubular articles of biaxially oriented crystallisable polyethylene terephthalate from tubular articles of smaller dimensions having at least one open end by a discontinuous process, comprising the steps of mechanically engaging both ends of one of the smaller tubular articles, heating the smaller tubular article to a stretching temperature of 75°C to 120°C which is above the glass transition temperature of the polymer but below its melting temperature, stretching the tubular article axially by mechanical means, and simultaneously or sequentially stretching the tubular article both axially and transversely by internal fluid pressure introduced through said open end and acting directly on the internal surface of the tubular article, characterised in that the step of stretching using internal fluid pressure is carried out in free space without the use of external or internal mould members.

2. A method according to claim 1, characterised by the further step of subsequently heating the stretched and biaxially oriented article to a temperature above the stretching temperature to anneal the polymer while maintaining an internal fluid pressure.

3. A method according to claim 2, characterised by the further step of cooling the annealed article before releasing the internal fluid pressure.

4. A method according to any one of the preceding claims, characterised in that the engaging and the axial stretching by mechanical means are effected by an external clamp and an internal plug securing one end and a chuck element engaging the other end of the tubular article, the chuck element having an inlet for fluid pressure and being movable relative to the clamp and plug.

5. A method according to any one of claims 1 to 4, characterised in that the engaging and the axial stretching by mechanical means are effected by a chuck element securing said open end and having an inlet for fluid pressure, and a head mounted on a rod which is slidable through, and movable relative to, the chuck element.

6. A method according to any one of the preceding claims, characterised in that the axial stretching by mechanical means is commenced before the internal fluid pressure is introduced to effect both axial and transverse stretching so that the mechanical axial stretching is in advance of the axial stretching caused by the internal fluid pressure.

7. A method according to any one of the preceding claims, characterised in that application of heat to the article is continued during the stretching thereof.

8. A method according to any one of the preceding claims, characterised in that the internal fluid pressure is provided by compressed gas at a pressure in the range from 7 to 15 bars.

9. A method according to any one of claims 3 to 8 as appendant to claim 2, characterised in that the article is heated to a temperature in the range from 110°C to 240°C to effect the annealing.

10. A method according to any one of claims 4 to 9 as appendant to claim 3, characterised in that the annealed article is cooled to a temperature of less than 120°C before release of the internal fluid pressure.

11. A method according to any one of claims 8 to 10 as appendant to claim 3, characterised in that the reduced internal fluid pressure employed during annealing and/or cooling is in the range from 2 to 4 bars.

12. Apparatus for producing tubular articles of biaxially oriented crystallisable polyethylene terephthalate from tubular articles of smaller dimensions having at least one open end, by a discontinuous process, comprising means for mechanically engaging both ends of the smaller tubular article, means for moving said engaging means apart so as to stretch the article axially, means for introducing fluid under pressure through the engaging means which engages the open end (or one of the open ends) into the interior of the smaller tubular article so as to act directly upon the interior surface of the smaller tubular article and to stretch it axially and transversely, the apparatus being characterised by the absence of any external or internal mould members for defining the transverse dimensions of the stretched tubular article.

13. Apparatus according to claim 12, characterised in that the means for engaging both ends of the smaller tubular article comprise an external clamp and an internal plug securing one end and a chuck element engaging the other end of the tubular article, the chuck element having an inlet for fluid pressure and being movable relative to the clamp and plug.

14. Apparatus according to claim 12, characterised in that the means for engaging both ends of the smaller tubular article comprise a chuck element securing said open end and having an inlet for fluid pressure, and a head mounted on a rod which is slidable through and movable relative to, the chuck element.

**Patentansprüche**

1. Verfahren zur Herstellung von röhrchenförmigen Teilen aus zweiachsig orientiertem, kristallisierbarem Polyäthylen-Terephthalat aus röhrchenförmigen Teilen mit kleineren Abmessungen, die wenigstens ein offenes Ende besitzen, durch einen diskontinuierlichen Prozeß, mit den Schritten: mechanisches Einspannen beider Enden eines kleineren röhrchenförmigen Teils, Heizen des kleineren röhrchenförmigen Teils auf eine Ziehtemperatur von 75°C bis 120°C, was oberhalb der Glas-Transformations-Temperatur des Polymers liegt, aber unterhalb seines Schmelzpunktes, axiales Dehnen des röhrchenförmigen Teils durch eine mechanische Einrichtung, und gleichzeitiges oder aufeinanderfolgendes axiales und seitliches Dehnen des röhrchenförmigen Teils durch internen Fluiddruck, der durch

# 0 153 342

das offene Ende aufgebracht wird und direkt auf die innere Oberfläche des röhrchenförmigen Teils wirkt, dadurch gekennzeichnet, daß der Schritt des Dehnens mit internem Fluiddruck im freien Raum ausgeführt wird ohne die Verwendung von äußeren oder inneren Formteilen.

2. Verfahren nach Anspruch 1, gekennzeichnet durch einen zusätzlichen Schritt, in dem anschließend das gedehnte und zweiachsig orientierte Teil auf eine Temperatur oberhalb der Ziehtemperatur gebracht wird, um das Polymer zu tempern, während ein interner Fluiddurch aufrechterhalten wird.

3. Verfahren nach Anspruch 2, gekennzeichnet durch einen zusätzlichen Schritt, in dem das getemperte Teil gekühlt wird, bevor der interne Fluiddruck abgebaut wird.

4. Verfahren nach einem der vorhergehenden Ansprüche, dadurch gekennzeichnet, daß das Einspannen und axiale Dehnen mittels einer mechanischen Einrichtung durch eine äußere Klemme und einen inneren Stopfen, die ein Ende sichern, bewirkt wird, sowie durch eine Klemmeinrichtung, die am anderen Ende des röhrchenförmigen Teils angreift, wobei die Klemmeinrichtung einen Einlaß für den Fluiddruck besitzt und gegenüber der Klemme und dem Stopfen bewegbar ist.

5. Verfahren nach einem der Ansprüche 1 bis 4, dadurch gekennzeichnet, daß das Einspannen und axiale Dehnen mittels einer mechanischen Einrichtung durch eine Klemmeinrichtung bewirkt wird, die das offene Ende fixiert und einen Einlaß für den Fluiddruck besitzt, sowie durch einen Kopf, der an eimem hindurchschiebbaren Stab angebracht ist und relativ zu dem Klemmteil bewegbar ist.

6. Verfahren nach einem der vorhergehenden Ansprüche, dadurch gekennzeichnet, daß das axiale Dehnen durch eine mechanische Einrichtung begonnen wird, bevor der interne Fluiddruck aufgebracht wird, um das axiale und auch seitliche Dehnen zu bewirken, so daß das mechanische, axiale Dehnen vor dem axialen Dehnen erfolgt, das durch den internen Fluiddruck bewirkt wird.

7. Verfahren nach einem der vorhergehenden Ansprüche, dadurch gekennzeichnet, daß die Heizung des Teils während des Dehnvorganges fortgesetzt wird.

8. Verfahren nach einem der vorhergehenden Ansprüche, dadurch gekennzeichnet, daß der interne Fluiddruck durch ein komprimiertes Gas mit einem Druck im Bereich von 7 bis 15 bar erzeugt wird.

9. Verfahren nach einem der Ansprüche 3 bis 8, soweit sie auf Anspruch 2, rückbezogen sind, dadurch gekennzeichnet, daß das Teil auf eine Temperatur im Bereich zwischen 110°C und 240°C aufgeheizt wird, um das Tempern zu erreichen.

10. Verfahren nach einem der Ansprüche 4 bis 9, soweit sie auf Anspruch 3 rückbezogen sind, dadurch gekennzeichnet, daß das getemperte Teil auf eine Temperatur von weniger als 120°C gekühlt wird, bevor der interne Fluiddruck abgebaut wird.

11. Verfahren nach einem der Ansprüche 8 bis 10, soweit sie auf Anspruch 3 rückbezogen sind, dadurch gekennzeichnet, daß der reduzierte interne Fluiddruck, der während des Temperns und/oder Kühlens angewandt wird, im Bereich zwischen 2 und 4 bar liegt.

12. Vorrichtung zur Herstellung von röhrchenförmigen Teilen aus zweiachsig orientiertem, kristallisierbarem Polyäthylen-Terephthalat aus röhrchenförmigen Teilen kleinerer Abmessungen, die wenigstens ein offenes Ende besitzen, durch einen diskontinuierlichen Prozeß, mit einer Einrichtung zum mechanischen Einspannen beider Enden des kleineren röhrchenförmigen Teils, mit einer Einrichtung, um die Einspannvorrichtung auseinander zu bewegen, so daß das Teil axial gedehnt wird, mit einer Einrichtung zur Zuführung eines Fluids unter Druck durch die Einspanneinrichtung, die das offene Ende (oder eines der offenen Enden) einspannt, in das Innere des kleineren röhrchenförmigen Teils, so daß der Druck direkt auf die innere Oberfläche des kleineren röhrchenförmigen Teils einwirkt und es axial und seitlich dehnt, gekennzeichnet durch des Fehlen von äußeren und inneren Formteilen zur Festlegung der seitlichen Abmessungen des gedehnten röhrchenförmigen Teils.

13. Vorrichtung nach Anspruch 12, dadurch gekennzeichnet, daß die Vorrichtung zum Einspannen beider Enden des kleineren röhrchenförmigen Teils aus einer äußeren Klemme und einem inneren Stopfen besteht, die ein Ende festlegen, und aus einer Klemmeinrichtung, die auf das andere Ende des röhrchenförmigen Teils wirkt, wobei die Klemmeinrichtung einen Einlaß für den Fluiddruck aufweist und gegenüber der Klemme und dem Stopfen bewegbar ist.

14. Vorrichtung nach Anspruch 12, dadurch gekennzeichnet, daß die Einrichtung zum Einspannen beider Enden des röhrchenförmigen Teils aus einem Klemmelement besteht, das das offene Ende festlegt und einen Einlaß für den Fluiddruck besitzt, und aus einem Kopf, der auf einem Stab angebracht ist und der durch das Klemmelement hindurch verschiebbar und relativ dazu bewegbar ist.

**Revendications**

1. Procédé de fabrication d'articles tubulaires un téréphtalate de polyéthylène cristallisable orienté suivant deux axes à partir d'articles tubulaires de plus petites dimensions présentant au moins une extrémité ouverte, par procédé discontinu, comprend les opérations consistant à accrocher mécaniquement les deux extrémités de l'un des articles tubulaires relativement petits, à porter le petit article tubulaire à une température d'allongement de 75°C à 120°C qui est supérieure à la température au point de transition vitreuse du polymère mais inférieure à sa température de fusion, à allonger axialement l'article tubulaire par des moyens mécaniques, et à allonger simultanément ou séquentiellement l'article tubulaire tant axialement que transversalement par une pression de fluide interne introduite à travers ladite extrémité ouverte et agissant directement sur la surface intérieure de l'article tubulaire, caractérisé en ce que l'opération d'allongement transversal à l'aide de pression de fluide interne est effectuée en espace libre sans recours à des éléments de moule extérieurs ou intérieurs.

2. Procédé selon la revendication 1, caractérisé par l'opération supplémentaire consistant à porter ensuite l'article allongé et orienté suivant deux axes à une température supérieure à la température d'allongement pour recuire le polymère tour en maintenant une pression de fluide interne.

3. Procédé selon la revendication 2, caractérisé par l'opération supplémentaire consistant à refroidir l'article recuit avant de dissiper la pression de fluide interne.

4. Procédé selon l'une quelconque des revendications précédentes, caractérisé en ce que l'accrochage et l'allongement axial par des moyens mécaniques sont effectués par un collier de serrage extérieur et par un bouchon intérieur immobilisant une extrémité et par un élément-mandrin égissant sur l'autre extrémité de l'article tubulaire, l'élément mandrin présentant une entrée de fluide sous pression et étant mobile par rapport au collier de serrage et au bouchon.

5. Procédé selon l'une quelconque des revendications 1 à 4, caractérisé en ce que l'accrochage et l'allongement axial par des moyens mécaniques sont effectués par un élément-mandrin immobilisant ladite extrémité ouverte et présentant une entre de fluide sous pression, et par un tête montée sur une tige pouvant coulisser à travers l'élément-mandrin et mobile par rapport à lui.

6. Procédé selonpl'une quelconque des revendications précédentes, caractérisé en ce que l'allongement axial par des moyens mécaniques est commencé avant qu'on n'établisse la pression de fluide interne pour assurer l'allongement tant axial que transversal de sorte que l'allongement axial mécanique précède l'allongement axial provoqué par la pression de fluide interne.

7. Procédé selon l'une quelconque des revendications précédentes, caractérisé en ce que l'application de chaleur à l'article est poursuivie pendant l'allongement de celui-ci.

8. Procédé selon l'une quelconque des revendications précédentes, caractérisé en ce que la pression de fluide interne est établi par du gaz comprimé sous une pression comprise entre 7 et 15 bars.

9. Procédé selon l'une quelconque des revendications 2 et 3 à 8, caractérisé en ce qu'on porte l'article à une température comprise entre 110°C et 240°C pour effectuer la recuisson.

10. Procédé selon l'une quelconque des revendications 3 et 4 à 9, caractérisé en ce qu'on refroidit l'article recuit jusqu'à une température de moins de 120°C avant de dissiper la pression de fluide interne.

11. Procédé selon l'une quelconque des revendications 3 et 8 à 10, caractérisé en ce que la pression de fluide interne réduite adoptée pendant la recuisson et/ou le refroidissement est comprise entre 2 et 4 bars.

12. Appareil pour la fabrication d'articles tubulaires en téréphtalate de polyéthylène cristallisable orienté suivant deux axes à partir d'articles tubulaires de dimensions plus faibles présentant au moins une extrémité ouverte, par procédé discontinu, comprenant des moyens pour accrocher mécaniquement les deux extrémités de l'article tubuliare plus petit, des moyens pour écarter ces moyens d'accrochage l'un de l'autre afin d'allonger axialement l'article, des moyens pour introduire du fluide sous pression à travers le moyen d'accrochage qui accroche l'extrémité ouverte (ou l'une des extrémités ouvertes) à l'intérieur de l'article tubulaire plus petit de façon à agir directement sur la surface intérieure de l'article tubulaire plus petit et à allonger celui-ci axialement et transversalement, l'appareil étant caractérisé par l'absence de tous éléments de moule extérieurs ou intérieurs destinés à définir les dimensions transversale de l'article tubulaire allongé.

13. Appareil selon la revendication 12, caractérisé en ce que les moyens d'accrochage des deux extrémités de l'article tubulaire plus petit comprenent un collier de serrage extérieur et un bouchon intérieur immobilisant une extrémité et un élément-mandrin agissant sur l'autre extrémité de l'article tubulaire, l'élément-mandrin présentant une entrée de fluide sous pression et étant mobile par rapport au collier de serrage et au bouchon.

14. Appareil selon la revendication 12, caractérisé en ce que les moyens d'accrochage des deux extrémités de l'article tubulaire plus petit comprenent un élément-mandrin immobilisant ladite extrémité ouverte et présentant une entrée de fluide sous pression, et une tête montée sur une tige pouvant coulisser à travers l'élément-mandrin et mobile par rapport à lui.

FIG. 1.

FIG. 2.

0 153 342

*Fig. 3.*

*Fig. 4.*

0 153 342

FIG. 5.

FIG. 6.

0 153 342

FIG. 7.